**Europäisches Patentamt**

**European Patent Office**

**Office européen des brevets**

(19)

(11) Veröffentlichungsnummer: **0 089 402**

**B1**

(12) # EUROPÄISCHE PATENTSCHRIFT

(45) Veröffentlichungstag der Patentschrift:
03.09.86

(21) Anmeldenummer: **82108173.4**

(22) Anmeldetag: **04.09.82**

(51) Int. Cl.⁴: **F 16 K 47/02**

(54) **Sicherheitsventil mit einer Reibeinrichtung zum Unterdrücken von Ventilschwingungen.**

(30) Priorität: **24.03.82 DE 3210768**

(43) Veröffentlichungstag der Anmeldung:
**28.09.83 Patentblatt 83/39**

(45) Bekanntmachung des Hinweises auf die Patenterteilung:
**03.09.86 Patentblatt 86/36**

(84) Benannte Vertragsstaaten:
**AT BE CH FR GB IT LI NL SE**

(56) Entgegenhaltungen:
**DE-B-2 654 077**
**FR-A-1 386 170**
**GB-A-1 140 753**
**US-A-3 848 632**

(73) Patentinhaber: **BOPP & REUTHER GMBH, Carl-Reuther- Strasse 1, D-6800 Mannheim 31 (DE)**

(72) Erfinder: **Schmitt, Manfred, Johann- Casimir-Strasse 17, D-6701 Friedelsheim (DE)**
Erfinder: **Zitzelsberger, Emil, Ulmenweg 6, D-6148 Heppenheim/Kirschhausen (DE)**

EP 0 089 402 B1

LIBER, STOCKHOLM 1986

## Beschreibung

Die Erfindung bezieht sich auf ein federbelastetes Sicherheitsventil mit einer zum Unterdrücken von Ventilschwingungen vorgesehenen mechanischen Reibeinrichtung, die aus einem Reibsatz mit mehreren radial zur Ventilachse beweglichen und als Ringsegmente ausgebildeten Reibbacken besteht, welche mit ihren innenliegenden Reibflächen den die Gegenreibfläche bildenden Mantel der Ventilspindel reibungsschlüssig umgreifen und sich mit ihrem Außenmantel zur Ventilsitzseite hin an der Innenkegelfläche eines festen Widerlagerringes abstützen, während sie auf der Gegenseite von einer in Spindellängsrichtung wirkenden vorgespannten Hilfsfeder angedrückt werden. Durch die beim Ventilöffnungs- oder -schließvorgang auf die Ventilspindel einwirkenden Reibkräfte wird die Bewegung der Ventilspindel geringfügig gebremst, so daß die zusätzlich zu der Öffnungs- oder Schließbewegung beim Auftreten von Schwingungen verursachte Oszillation der beweglichen Ventilteile in ihrer Amplitude gedämpft wird.

Die FR-A-1.386.170 beschreibt ein Ventil gemäß dem Oberbegriff des Patentanspruchs 1. Aus der FR-A 1 386 170 ist eine mechanisch Reibeinrichtung für ein Temperaturregelventil bekannt geworden, bei der der Reibsatz aus zwei halbkreisförmigen Ringsegmenten besteht, die sich mit einem kegelförmigen Außenmantel gegen die entsprechend geneigte Innenkegelfläche des Widerlagerringes legen und innen die Ventilspindel reibungsschlüssig umschließen. Die Hilfsfeder wirkt hierbei direkt von oben auf die beiden Strinseiten der aus einem elastischen Werkstoff bestehenden Riebbacken-Ringsegmente und drückt sie in Ventilöffnungsrichtung in den Innenkegel des Widerlagerringes. Für federbelastete Sicherheitsventile ist ein solcher Schwingungsdämpfer ungeeignet, da er bei einem Verkleben der Reibbacken mit der Ventilspindel die Öffnungsbewegung der Ventilspindel in unzulässiger Weise blockieren würde.

Außerdem ist bei diesen elastischen Riebbacken die Haftreibung sehr viel größer als die Gleitreibung, so daß sich die Ventilspindel ruckartig verlagert, was bei Sicherheitsventilen wegen des erforderlichen gleichmäßigen öffnungshubes vermieden werden muß. Auch ist infolge der hohen Reibung der elastischen Reibbacken im Widerlagerring keine definierte Anpressung an die Ventilspindel gewährleistet und die Reibkräfte können sich durch bleibende Verformung des elastischen Werkstoffes verändern. Weiterhin besteht die Gefahr, daß die beiden Ringsegmente durch ihre Kegelin-Kegel-Führung ungleich angepreßt werden, wenn die Hilfsfeder geringe Fertigungsungenauigkeiten aufweist. Dadurch werden die Reibkräfte einseitig auf die Ventilspindel übertragen.

Aus der GB-A-1 140 753 ist eine Abbremseinrichtung für im freien Fall oder durch einen Antrieb in einer Richtung bewegte Massen bekannt, bei der die Masse auf einer von einer zentralen festen Bremsstange geführten und aus mehreren zylinderschalenförmigen Reibbacken bestehenden Reibeinrichtung ruht. Die Abbremsung der Masse erfolgt hier durch einen konischen Erweiterungsabschnitt der Bremsstange mit anschließendem verbreitertem Auslaufabschnitt, auf die die Reibbacken auffahren und hierbei gegen federnde Außenspannringe der Reibeinrichtung gedrückt werden, die mit Keilflächenpaaren und Keilflächengegenpaaren reibend aneinanderliegen. Bei der Aufweitung der Reibbacken erfolgt hier eine starke Verspannung der Reibbacken mit der Bremsstange, wodurch die Massenkräfte infolge der hohen Reibkräfte an den Reibbacken und zwischen den Keilpaarungen der Spannringe ganz aufgezehrt werden.

Für Sicherheitsventile ist diese bekannte Bremsvorrichtung ungeeignet, da die auf die Ventilspindel des Sicherheitsventils übertragbaren Bremskräfte nur sehr gering und genau definiert sein dürfen, damit der Ventilöffnungs- und -schließvorgang, der innerhalb vorgeschriebener enger Drucktoleranzen kurzfristig zu erfolgen hat, nicht unzulässig verzögert wird.

Aus der DE-A-26 54 077 ist auch ein federbelastetes Druckbegrenzungsventil bekannt geworden, bei dem zur Dämpfung der Ventilteller-Schwingungen ein zur Einstellung der Ventilfedervorspannung vorgesehenes Widerlager und eine mit dem beweglichen Ventilteller verbundene und durch eine Bohrung des Widerlagers hindurchtretende bewegliche Führungsstange reibend gegeneinander verkantet sind. Die Verkantung von Widerlager und Führungsstange wird durch eine außermittig am Widerlager angreifende Einstellschraube bewirkt. Auch bei dieser bekannten Reibeinrichtung kann das Ventil nicht mehr öffnen, wenn die Führungsstange im Widerlager und/oder im oberen oder unteren Führungslager durch die Verkantung gefressen hat. Außerdem treten hier durch unvermeidliches Fertigungsspiel in der Widerlagerbohrung und an der Führungsstange bei der Verkantung unterschiedliche Flächenpressungen auf und bei hohen Flächenpressungen entsteht an den Reibflächen und in den Lagern der Führungsstange infolge der durch die Verkantung ausgelösten Querkräfte ein hoher Verschleiß, so daß gleichbleibende Reibkräfte nicht gewährleistet sind. Abgesehen hiervon ist bei dieser bekannten Reibeinrichtung die Führungsstange infolge der Verkantung ständig leicht geneigt, so daß der hiermit fest verbundene Verschlußkörper entweder schlecht schließt oder nachgiebig ausgebildet sein muß.

Aufgabe der Erfindung ist es, die Reibeinrichtung für Sicherheitsventile so auszubilden, daß nur eine geringe, den Öffnungs-und Schließvorgang des Sicherheitsventils nicht unzulässig verzögernde und eine auf Dauer gleichbleibende definierte Reibkraft zwischen den Reibflächen der Reibeinrichtung gewährleistet ist und das Sicherheitsventil im Falle eines ungewollten Festsetzens der aufeinanderliegenden Reibflächen noch innerhalb des zulässigen Öffnungsdruckes öffnet.

Die Lösung dieser Aufgabe wird in den Merkmalen des Patentanspruchs 1 gesehen.

Bei federbelasteten Sicherheitsventilen besteht bei Erreichen des Ansprechdruckes kurzfristig ein labiler Gleichgewichtszustand zwischen den vom Medium ausgelösten Ventilöffnungskräften und den Schließkräften der Ventilfeder und durch die bei Beginn der Öffnungsbewegung auftretende Umwandlung der statischen Druckenergie in Strömungsenergie können durch eine geringe Druckabsenkung ausgelöste negative Druckwellen auftreten, die den Ventilverschlußkörper und die damit verbundenen beweglichen Ventilteile zum Schwingen anregen können. Durch die an der Ventilspindel angreifende Reibeinrichtung entsprechend den Merkmalen des Anspruchs 1 werden über die Hilfsfeder nur sehr geringe Reibkräfte übertragen, die gerade ausreichen, um eine solche Neigung des Ventilverschlußkörpers zum Schwingen bereits im Ansatz zu unterdrücken, so daß es garnicht erst zum Schwingen der beweglichen Ventilteile kommen kann. Dadurch läßt sich mit auf die Ventilspindel übertragenen Bremskräften auskommen, die bei etwa 2 bis 3 % der auf den Ventilverschlußkörper einwirkenden Kräfte liegen.

Da die Reibbacken über einen mit einer Innenkegelfläche versehenen Druckring von der in Ventilschließrichtung wirkenden vorgespannten Hilfsfeder gehalten werden, deren Federkraft im engen Bereich der Druckdifferenz zwischen dem Ansprechdruck des Sicherheitsventils und dem zulässigen Öffnungsdruck liegt, kann die Hilfsfeder auch im Falle eines Verklebens der Reibbacken mit den Gegenreibflächen an der Ventilspindel noch innerhalb des nicht wesentlich über den Ansprechdruck liegenden zulässigen Öffnungsdruckes öffnen. Die verklebten Reibbacken werden nämlich dann beim Ventilöffnungsvorgang in Ventilöffnungsrichtung von der Ventilspindel mitgenommen, wobei die Hilfsfeder durch ihre geringe Federkraft und ihre geringe Steifigkeit über den vollen Ventilhub weiter zusammengedrückt wird und damit auch im Falle eines Verklebens der Reibflächen kein Sicherheitsrisiko mehr gegeben ist.

Das Zusammenspiel der Innenkegelflächen am Druckring und am Widerlagerring mit dem kugelförmigen Außenmantel der als Ringsegmente ausgebildeten Reibbacken gewährleistet hierbei eine gleichbleibende und verschleißarme Übertragung der Hilfsfederkräfte, da auch bei auftretenden Fertigungsungenauigkeiten der Winkel, unter dem die Innenkegelflächen der Druckringe an dem kugelförmigen Außenmantel der Reibbacken anliegen, sich nur ganz gering ändert, so daß auch die für die Höhe der Reibkraft an der Ventilspindel maßgebenden Querkomponenten keine nennenswerten Veränderungen erfahren. Durch die keilförmig am kugelförmigen Außenmantel der Reibbacken anliegenden Kegelmantelflächen der beiden Druckringe lassen sich die Hilfsfederkräfte in einfacher Weise spielfrei in die quer zur Bewegungsrichtung der Ventilteile verlaufende Anpreßrichtung der Reibbacken umlenken. Die exakt vorgespannte Hilfsfeder gewährleistet hierbei infolge der symmetrischen Kraftübertragung auf Dauer eine definierte Reibkraft, die auch bei einem eventuell auftretenden geringen Abrieb an den Reibflächen oder an den keilförmig wirkenden Anlageflächen der Druckringe durch den Spielausgleich der Hilfsfeder konstant gehalten wird.

Durch die gemäß den Merkmalen des Anspruchs 2 vorgesehene Anordnung mehrerer Reibsätze hintereinander und die Zwischenschaltung der mit Gegenkeilflächen für die Schrägflächen der Reibbacken versehenen Druckkörper zwischen den einzelnen Reibsätzen werden alle Reibsätze von der gemeinsamen Hilfsfeder in Reibflächen-Anpreßrichtung belastet, so daß sich die Reibkraft dadurch ganz erheblich erhöhen oder sogar vervielfältigen läßt. Bei vorgegebener definierter Reibkraft an den Reibflächen kann die Kraft der Hilfsfeder und ihre Federsteifigkeit auch entsprechend verringert werden, so daß die Hilfsfeder im Falle eines ungewollten Verklebens der Reibflächen noch leichter und unterhalb des zulässigen Öffnungsdruckes um den Ventilhub zusammengedrückt werden kann.

Bei der Anordnung mehrerer Reibsätze hintereinander wird entsprechend den Merkmalen des Anspruchs 3 durch die zwischen den einzelnen Reibsätzen vorgesehenen Druckringe mit den Doppelkegelmantelflächen auch eine käfigartige Halterung der zusätzlichen Reibsätze und eine gleichbleibende und verschleißarme Übertragung der Hilfsfederkraft sowie eine von Fertigungstoleranzen unabhängige Abstützung an den gekrümmten Außenmänteln der zusätzlichen Ringsegmente erzielt.

Durch den Sprengring nach Anspruch 4 lassen sich die Ringsegmente insbesondere für die Montage oder Demontage leicht zu einem die Ventilspindel umschließenden Reibsatz zusammenhalten.

Beim Ventilöffnungsvorgang wirkt die Reibkraft der Richtung der Hilfsfederkraft entgegen und entlastet die Gegenkeilflächen auf der dem Verschlußkörper zugewandten Seite der Reibbacken teilweise, während beim Ventilschließvorgang die Reibkraft in der Richtung der Hilfsfederkraft wirkt. Dadurch wird beim Öffnungsvorgang eine geringere Reibkraft als beim Schließvorgang auf die Gegenreibflächen übertragen. Diese unterschiedliche Reibkraft beim Öffnungs- und Schließvorgang läßt sich nach dem Merkmal des Anspruchs 5 durch die unterschiedlich spitzen Winkel α und β der Kegelmantelflächen in bezug auf die Bewegungsrichtung der Ventilspindel ausgleichen.

Dadurch, daß die Vorspannung der Hilfsfeder gemäß Anspruch 6 einstellbar ist, kann die Reibkraft auf den für eine Schwingungsunterdrückung günstigen Wert justiert werden.

Der Reibsatz oder die Reibsätze mit dem Haltewiderlager, dem oder den Druckkörpern und der Hilfsfeder lassen sich zweckmäßigerweise gemäß Anspruch 7 in einen in den Ventilfederinnenraum eingehängten Einsatztopf einbauen, wodurch die Teile der Reibeinrichtung geschützt in einer Baueinheit untergebracht sind. Soll der Ansprechdruck der Ventilfeder neu eingestellt werden, so wird die Vorspannung der Hilfsfeder davon nicht beeinflußt, da die ganze Baueinheit beim Verstellen der Ventilfeder entsprechend mit nach unten wandert. Diese Baueinheit läßt sich auch nachträglich leicht in vorhandene Sicherheitsventile einbauen.

Durch die Verwendung eines Werkstoffes entsprechend dem Merkmal des Anspruchs 8 für die Reibbacken oder die anliegenden beweglichen Ventilteile wird der Bewegungsbeginn der Ventilteile durch leichtere Überwindung der Ruhereibung nicht nachteilig verzögert und während der Öffnungs- oder Schließbewegung werden die beweglichen Ventilteile in ausreichendem Maße im schwingungsunterdrückenden Sinne gebremst.

Nach dem Merkmal des Anspruchs 9 werden die die Reibwärme gut ableitenden Eigenschaften des Grundwerkstoffes mit den guten Reibeigenschaften einer entsprechenden Deckschicht kombiniert.

Die Erfindung wird anhand von Ausführungsbeispielen in der Zeichnung näher erläutert, und zwar zeigt:

Fig. 1 ein federbelastetes Sicherheitsventil mit einer in den Ventilfederinnenraum eingebauten erfindungsgemäßen Reibeinrichtung im Längsschnitt,

Fig. 2 die Reibeinrichtung nach Fig. 1 im Längsschnitt in vergrößertem Maßstab,

Fig. 3 eine andere erfindungsgemäße Reibeinrichtung mit mehreren hintereinander angeordneten Reibsätzen im Längsschnitt,

Fig. 4 einen Querschnitt durch die als Ringsegmente ausgebildeten Reibbacken nach Linie IV - IV der Fig. 2 und

Fig. 5 die Ausbildung der Gegenkeilflächen mit unterschiedlichen Winkeln.

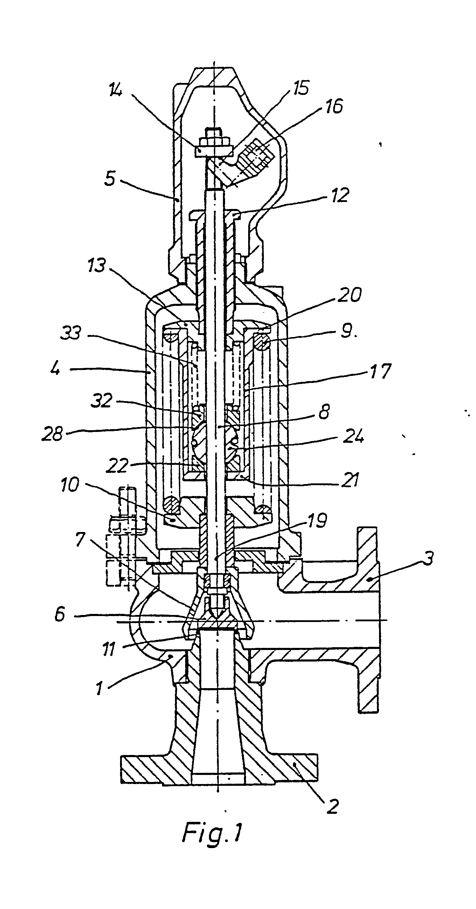

Das in der Fig. 1 gezeigte Sicherheitsventil besteht aus dem Ventilgehäuse 1 mit Eintrittstutzen 2 und Austrittstutzen 3, auf das die Federhaube 4 aufgesetzt ist, die durch die Kappe 5 druckdicht nach oben verschlossen ist. Zu den beweglichen, schwingungsfähigen Ventilteilen gehören der Verschlußkörper 6 mit Hubglocke 7, die Ventilspindel 8, die Ventilfeder 9 und der untere sich an der Ventilspindel 8 abstützende Federteller lo für die Ventilfeder 9. Der Verschlußkörper 6 wird durch die Kraft der Ventilfeder 9 ständig in Ventilschließrichtung, d. h. in Bichtung auf den Ventilsitz ll gepreßt. Überschreitet der Mediumdruck in dem Eintrittstutzen 2 den Ansprechdruck des Ventils, so wird der Verschlußkörper 6 vom Ventilsitz 11 abgehoben und das Medium kann über den Austrittstutzen 3 abfließen. Die Einstellung des Ansprechdruckes erfolgt durch die Spannschraube 12, die über den oberen Federteller 13 auf die Ventilfeder 9 zur Einwirkung kommt. Die Ventilspindel 8 ist an ihrem oberen Ende mit einem Anschlag 14 versehen, an dem der Daumen 15 der Anlüftvorrichtung 16 zum öffnen des Ventils von Hand angreift.

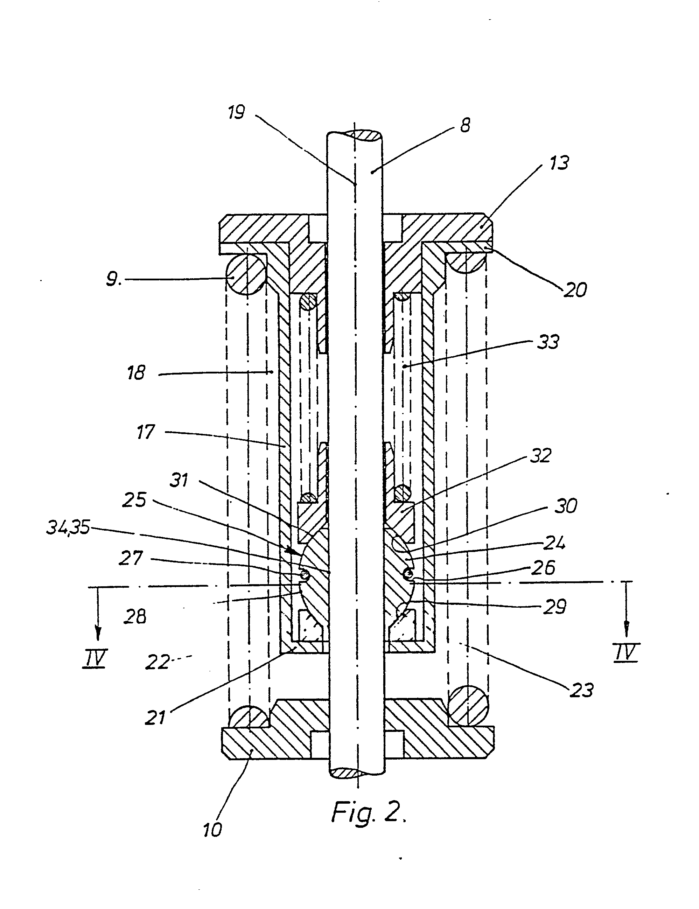

Die Fig. 1 und 2 lassen erkennen, wie die im Einsatztopf 17 untergebrachte Reibeinrichtung in den Innenraum 16 der Ventilfeder 9 in Richtung der Ventilachse 19 eingebaut ist. Der Rand 2o des Einsatztopfes 17 ist zwischen dem oberen Federteller 13 und der Ventilfeder 9 eingespannt und der Binsatztopf 17 hängt im Ventilfederinnenraum 18, so daß der Topfboden 21 das Haltewiderlager 22 der Reibeinrichtung trägt. Das Haltewiderlager 22 ist als Druckring ausgebildet, an dessen Kegelmantelfläche 23 sich der aus mehreren Ringsegmenten 24 bestehende Reibsatz 25 abstützt. Diese Ringsegmente 24 umschließen die Ventilspindel 8 und werden durch den an Nuten 26 eingelegten Sprengring 27 gehalten.

Der Außenmantel 28 der Ringsegmente 24 ist kugelförmig ausgebildet und die gekrümmte Oberfläche bildet auf der dem Verschlußkörper 6 zugewandten Seite die keilartig wirkenden Schrägflächen 29, an denen die als Gegenkeilfläche ausgebildete Kegelmentelfläche 23 des Heltewiderlagerringes 22 angreift.

Auf der vom Verschlußkörper 6 abgewandten Seite der Ringsegmente 24 legen sich die gekrümmten Mantelflächen als Schrägflächen 30 gegen die Kegelmantelfläche 31 des Druckringes 32. Zwischen dem oberen Ventilfederteller 13 und dem Druckring 32 ist die vorgespennte Hilfsfeder 33 in den Einsatztopf 17 eingesetzt, deren Federkraft in Richtung der Ventilachse 19, und zwar in Ventilschließrichtung wirkt. Die Hilfsfeder 33 drückt auf die Keilpaarungen 31, 30 und 29, 23, wobei die Federkraft in die quer zur Bewegungsrichtung der Ventilspindel 8 liegende Anpressrichtung umgelenkt wird und als Anpresskraft auf die innenliegenden kreisbogenförmigen Reibflächen 34 der Reibbacken 24 zur Einwirkung kommt. Der Mantel der Ventilspindel 8 bildet im Bereich der Ringsegmente 24 die Gegenreibfläche 35 der beweglichen Ventilteile.

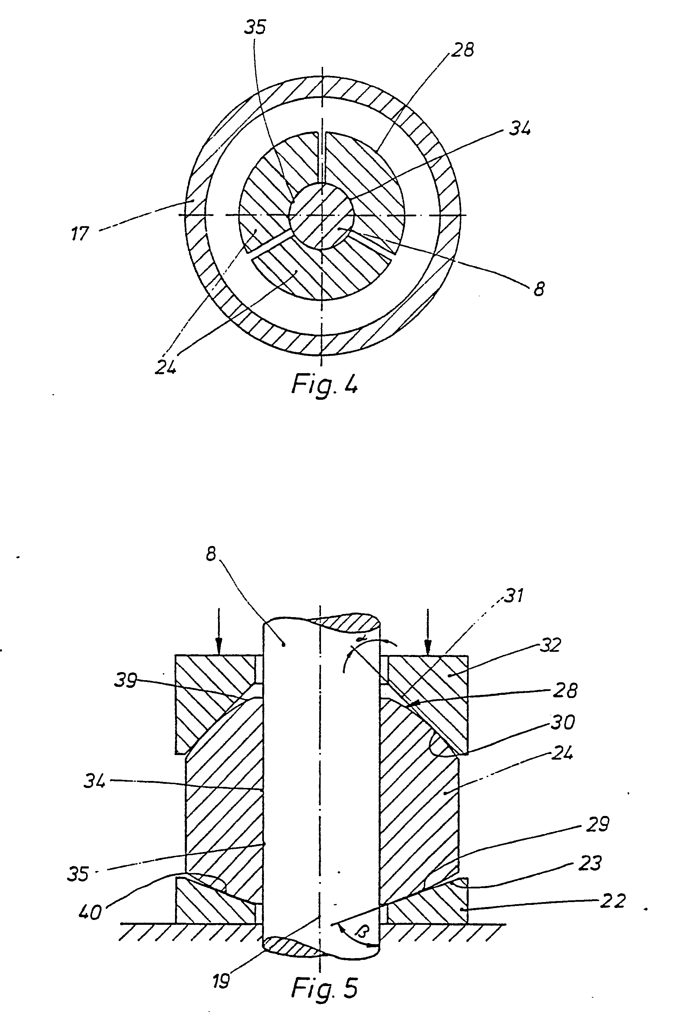

Die die Ventilspindel 8 umschließenden Ringsegmente 24 sind im Querschnitt in der Fig. 4 dargestellt, aus der zu erkennen ist, wie die drei Ringsegmente 24 mit ihren innenliegenden kreisbogenförmigen Reibflächen 34 großflächig an dem als Gegenreibfläche 35 wirkenden Mantel der Ventilspindel 6 enliegen.

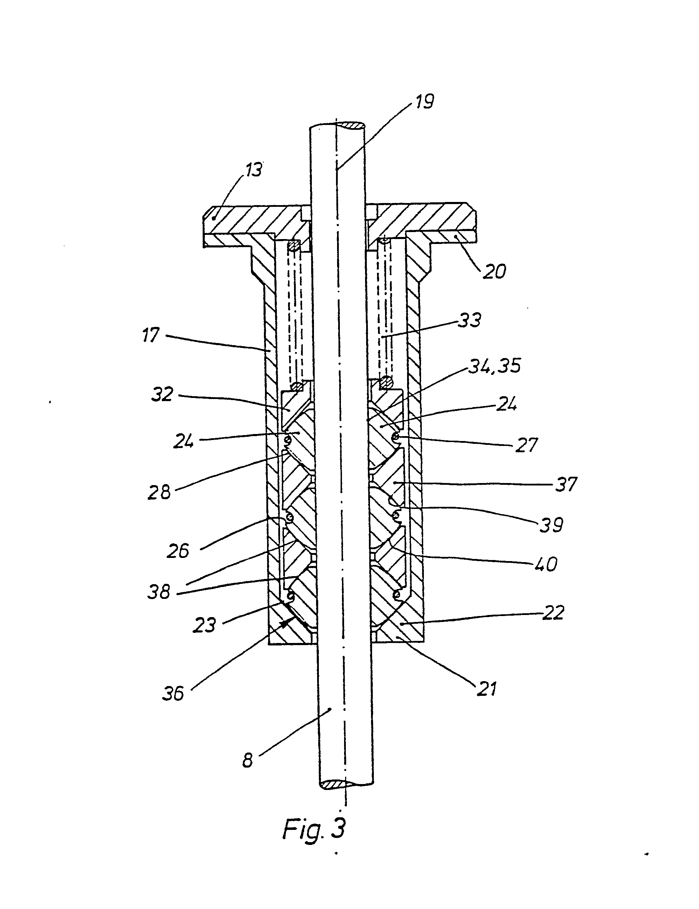

Bei dem Ausführungsbeispiel nach Fig. 3 sind mehrere Reibsätze 36 in Bewegungsrichtung der beweglichen Ventilspindel 8 hintereinander angeordnet. Zwischen den einzelnen Reibsätzen 36 ist jeweils ein Druckring 37 vorgesehen, der mit Doppelkegelmentelflächen 38 versehen ist, die sich als Gegenkeilflächen an den gekrümmten Außenmänteln 28 der benachbarten Ringsegmente 24 anlegen. Die Hilfsfeder 33 befindet sich hinter dem letzten Reibsatz 36 über dem Druckring 32.

Die Reibsätze 36 sind linsenförmig ausgebildet und besitzen eine obere Kugelfläche 39 und eine über Abrundungen hiermit verbundene untere Kugelfläche 40, deren Mittelpunkte in der Ventilachse 19 liegen, so daß eine Kräfteausgleichende Verlagerung der Berührungsstellen zwischen den Keilpaarungen möglich ist. Durch die linsenförmige Ausbildung der Reibsätze 36 werden die Reibsätze niedriger als bei kugelförmiger Ausbildung, so daß für die hintereinanderliegenden Reibsätze weniger Bauhöhe benötigt wird.

Die Fig. 5 zeigt eine Reibeinrichtung, bei der die an dem kugelförmigen Außenmantel 28 der Ringsegmente 24 anliegenden Druckringe 22 und 32 mit ihren Kegelmantelflächen 23 und 31 unterschiedlich spitze Winkel α und β zur Bewegungsrichtung der Ventilspindel 8 einschließen, um beim Ventilöffnungsvorgang und beim Ventilschlie-vorgang die gleichen Reibkräfte an der Ventilspindel 8 zu erzielen. Damit die Berührungsstellen zwischen dem Druckring 32 und den Ringsegmenten 24 einerseits und zwischen dem Haltewiderlager 22 und den Ringsegmenten 24 andererseits trotz der unterschiedlichen Winkel α und β möglichst übereinander zu liegen kommen, wird der Außenmantel 28 der Ringsegmente 24 hier aus den beiden Kugelflächen 39 und 40 mit unterschiedlichen Radien gebildet.

## Patentansprüche

1. Ventil mit einer zum Unterdrücken von Ventilschwingungen vorgesehenen mechanischen Reibeinrichtung, die aus einem Reibsatz mit mehreren radial zur Ventilachse beweglichen und als Ringsegmente ausgebildeten Reibbacken (24) besteht, welche mit ihren innenliegenden Reibflächen (34) den die Gegenreibfläche (35) bildenden Mantel der Ventilspindel (8) reibungsschlüssig umgreifen und sich mit ihrem Außenmantel (28) zur Ventilsitzseite hin an der Innenkegelfläche (23) eines festen Widerlagerringes (22) abstützen, während sie auf der Gegenseite von einer in Spindellängsrichtung wirkenden vorgespannten Hilfsfeder (33) angedrückt werden, dadurch gekennzeichnet, daß der aus den Reibbacken (24) gebildete Reibsatz einen kugelförmigen oder aus Kugelflächen gebildeten Außenmantel (28) besitzt und die Reibbacken (24) mit ihren unteren Kugelflächen (29) an der Innenkegelfläche (23) des festen Widerlagerringes (22) und mit ihren oberen Kugelflächen (30) an der Innenkegelfläche (31) eines auf der Gegenseite angeordneten Druckringes (32) anliegen, wobei für die Verwendung der Reibeinrichtung in einem federbelasteten Sicherheitsventil die den Druckring (32) an die Reibbacken (24) drückende Hilfsfeder (33) in Ventilschließrichtung wirkend ausgebildet und in ihrer Federkraft so bemessen ist und von so geringer Federsteifigkeit ist, daß im Falle einer ungewollten Verklebung der Reibflächen (34) mit der Ventilspindel (8) die Hilfsfeder (33) während des Ventilöffnungsvorganges durch die Reibbacken (24) noch innerhalb des nicht wesentlich über dem Ansprechdruck liegenden zulässigen Öffnungsdruckes um den Ventilhub weiter zusammendrückbar ist.

2. Sicherheitsventil nach Anspruch 1, dadurch gekennzeichnet, daß mehrere aus den Reibbacken (24) gebildete Reibsätze (36) in Bewegungsrichtung der beweglichen Ventilteile (6 - 10) hintereinander angeordnet sind, wobei zwischen den einzelnen Reibsätzen (36) jeweils ein Druckkörper (37) mit entsprechenden Gegenkeilflächen (38) für die an den Reibbacken (24) der Reibsätze (36) sitzenden Schrägflächen (29, 30) vorgesehen ist, und sich die gemeinsame Hilfsfeder (33) auf der vom Verschlußkörper (6) abgewandten Seite des letzten Reibsatzes befindet.

3. Sicherheitsventil nach Anspruch 2, dadurch gekennzeichnet, daß die zwischen den einzelnen Reibsätzen vorgesehenen Druckkörper als Druckringe (37) mit Doppelkegelmantelflächen (38) ausgebildet sind, die sich als Gegenkeilflächen an den kugelförmigen oder aus Kugelflächen (39, 40) bestehenden Außenmantel (28) der Ringsegmente (24) anlegen.

4. Sicherheitsventil nach einem oder mehreren der Ansprüche 1 bis 3, dadurch gekennzeichnet, daß die einen kugelförmigen oder aus Kugelflächen (39, 40) bestehenden Außenmantel (28) tragenden Ringsegmente (24) durch einen in Umfangsnuten (26) eingelegten Sprengring (27) zu einem die Ventilspindel (8) umschließenden Reibsatz (25, 36) zusammengehalten werden.

5. Sicherheitsventil nach einem oder mehreren der Ansprüche 1 bis 4, dadurch gekennzeichnet, daß die als Gegenkeilflächen wirkenden Kegelmantelflächen (23, 31, 38) an dem Haltewiderlager-Druckring (22) und/oder an dem oder den übrigen Druckringen (32, 37) auf der dem Verschlußkörper (6) zugewandten Seite der Ringsegmente (24) in einem weniger spitzen Winkel (β) zur Bewegungsrichtung der Ventilspindel (8) an dem kugelförmigen Außenmantel (28) anliegen als auf der vom Verschlußkörper abgewandten Seite mit dem Winkel (α).

6. Sicherheitsventil nach einem oder mehreren der Ansprüche 1 bis 5, dadurch gekennzeichnet, daß die Vorspannung der Hilfsfeder (33) einstellbar ist.

7. Sicherheitsventil nach einem oder mehreren der Ansprüche 1 bis 6, dadurch gekennzeichnet, daß der oder die Reibsätze (25, 36) zusammen mit dem Haltewiderlager (22), dem oder den Druckkörpern (32, 37) und der Hilfsfeder (33) in einem Einsatztopf (17) untergebracht sind, der mit seinem Rand (20) zwischen der Ventilfeder (9) und dem oberen Ventilfederteller (13) eingespannt ist und mit seinem das Haltewiderlager (22) tragenden Boden (21) frei in den zylindrischen Innenraum (18) der Ventilfeder (9) hineinragt.

8. Sicherheitsventil nach einem oder mehreren der Ansprüche 1 bis 7, dadurch gekennzeichnet, daß die Reibbacken (24) und/oder die anliegenden beweglichen Ventilteile (8) aus einem Werkstoff mit guten Reibeigenschaften bestehen, bei dem insbesondere zwischen dem Reibbeiwert der Ruhe und dem der Bewegung ein möglichst geringer Unterschied vorhanden ist.

9. Sicherheitventil nach einem oder mehreren der Ansprüche 1 bis 8, dadurch gekennzeichnet, daß die Reibbacken (24) und/oder die anliegenden beweglichen Ventilteile (8) aus einem gut wärmeleitenden Grundwerkstoff bestehen, auf den im Bereich der Reibflächen (34, 35) eine Deckschicht aus einem Werkstoff mit guten Reibeigenschaften aufgebracht ist.

## Claims

1. Valve comprising a frictional mechanical system for suppression of valve oscillations, which comprises a friction assembly having several friction shoes (24) radially movable with respect to the valve stem and constructed as annular segments, which enflanked the surface of the valve stem (8) in friction-locked manner with their in wardly situated friction faces (34), said stem surface forming the mating friction surface (35), and with their outer surfaces (28) bear towards the valve seat side on the internal tapering surface (23) of a fixed abutment ring (22), whereas on the opposite side, they are pressed into contact by means of an auxiliary spring (33) preloaded in the longitudinal direction of the stem, characterised in that the friction assembly formed by friction shoes (24), has an external surface (28) of spheroidal form or formed by spheroidal surfaces, and the friction shoes (24) bear with their lower spheroidal surfaces (29) on the internal tapered surface (23) of the fixed abutment ring (22) and with their upper spheroidal surfaces (30) on the internal tapered surface (31) of a thrust ring (32) situated on the opposite side, the auxiliary spring (33) pressing the thrust ring (32) against the friction shoes (24) being constructed to act in the valve closing direction for application of the friction system in a spring-loaded safety valve, and having its spring force so dimensioned, and having so low a spring stiffness, that in case of accidental sticking of the friction surfaces (34) on the valve stem (8), the auxiliary spring (33) may be compressed further during the valve opening action by means of the friction shoes (24) by the amount of the valve stroke, still within the permissible opening pressure amounting to little more than the response pressure.

2. Safety valve according to claim 1, characterised in that several friction assemblies (36) formed by friction shoes (24) are placed one after another in the direction of displacement of the movable valve elements (6-10), the separate friction assemblies (36) in each case having arranged between them a thrust member (37) with appropriate mating taper surfaces (38) for the oblique surfaces (29, 30) present on the friction shoes (24) of the friction assemblies (36), and the common auxiliary spring (33) being situated at the side of the last friction assembly facing away from the closure element (6).

3. Safety valve according to claim 2, characterised in that the thrust elements provided between the separate friction assemblies are constructed as thrust rings (37) having double taper surfaces (38) which bear as mating taper surfaces against the outer surface (28) of the annular segments (24), said outer surface being spheroidal or formed by spheroidal surfaces (39, 40).

4. Safety valve according to one or more of the claims 1 to 3, characterised in that the annular segments (24) bearing an outer surface (28) which is spheroidal or formed by spheroidal surfaces (39, 40) are held together to form a friction assembly (25, 36) enflanking the valve stem (8) by means of a circlip (27) inserted into peripheral grooves (26).

5. Safety valve according to one or more of the claims 1 to 4, characterised in that the tapered jacket surfaces (23, 31, 38) acting as mating taper surfaces on the holding abutment thrust rings (22) and/or the additional thrust ring or rings (32, 37) bear on the spheroidal outer surface (28) at a less acute angle ($\alpha$), relative to the displacement direction of the valve stem, on the side of the annular segments (24) facing towards the closure member (6), than the angle ($\alpha$) with which they bear on the side of the segments facing away from the closure member.

6. Safety valve according to one or more of the claims 1 to 5, characterised in that the initial loading of the auxiliary spring (33) is adjustable.

7. Safety valve according to one or more of the claims 1 to 6, characterised in that the friction assembly or assemblies (25, 36) is/are installed together with a holding abutment (22), the thrust member or members (32, 37) and the auxiliary spring (33), in an insertion vessel (17) which has its rim (20) clamped between the valve spring (9) and the upper valve spring plate (13) and freely projects with its base (21) carrying the holding abutment (22) into the cylindrical internal space (18) of the valve spring (9).

8. Safety valve according to one or more of the claims 1 to 7, characterised in that the friction shoes (24) and/or the movable valve elements (8) in contact, consists of a material having satisfactory frictional properties, wherein a minimum difference prevails in particular between the friction coefficients when at rest and when in motion.

9. Safety valve according to one or more of the claims 1 to 8, characterised in that the friction shoes (24) and/or the movable valve elements (8) in contact, consists of a base material having satisfactory thermal conductivity, on which a covering layer of a material having satisfactory frictional properties is arranged in the area of the friction surfaces (34, 35).


**Revendications**

1. Soupape comportant un dispositif mécanique de frottement qui est prévu pour supprimer les vibrations de la soupape et qui est constitué par un groupe de frottement comportant plusieurs joues de frottement (24) déplaçables radialement par rapport à l'axe de la soupape et agencées en tant que segments annulaires, qui enserrent à friction par leurs surfaces de frottement (34) tournées vers l'intérieur l'enveloppe de la tige de soupape (8) constituant les contre-surfaces de frottement (35) et qui prennent appui par leur surface latérale extérieure en regard du siège de soupape contre la surface conique intérieure d'un anneau rigide de contre-butée (22), tandis que du côté opposé lesdites joues sont comprimées par un ressort auxiliaire (33) prétendu agissant dans la direction longitudinale de la tige, caractérisée par le fait que le groupe de frottement constitué par les joues de frottement (24) possède une surface latérale extérieure (28) de forme sphérique ou constituée par des surfaces sphériques et que les joues de frottement (24) s'appliquent par leurs surfaces sphériques inférieures (29) contre la surface conique intérieure (23) de l'anneau rigide de contre-butée (22) et par leurs surfaces sphériques supérieures (30) contre la surface conique intérieure (31) d'une bague de pression (32) disposée du côté opposé, pour l'utilisation du dispositif de frottement dans une soupape de sécurité sollicitée par ressort, le ressort auxiliaire (33) comprimant la bague de pression (32) contre les joues de frottement (24) étant agencé de manière à agir dans la direction de fermeture de la soupape et étant dimensionné en ce qui concerne sa force élastique et ayant une rigidité propre suffisamment faible de manière que dans le cas d'un collage imprévu des surfaces de frottement (34) avec la tige (8) de soupape, le ressort auxiliaire (33) puisse encore continuer à être compressible par les joues de frottement (24) pendant le processus d'ouverture de la soupape, suivant un ordre de grandeur correspondant à la course de celle-ci, dans la limite de la pression d'ouverture admissible s'élevant non sensiblement au-dessus de la pression de seuil de fonctionnement.

2. Soupape de sécurité selon la revendication 1, caractérisée par le fait que plusieurs groupes de frottement (36) constitués par les joues de frottement (24) sont disposés les uns à la suite des autres dans la direction de déplacement des pièces mobiles (6-10) de la soupape, entre les groupes de frottement (36) individuels étant chaque fois prévu un corps de pression (37) pourvu de contre-surfaces coniques (38) correspondantes pour les surfaces obliques (29, 30) reposant contre les joues de frottement (24) des groupes de frottement (36), et le ressort auxiliaire (33) commun se trouvant du côté du dernier groupe de frottement éloigné du corps obturateur (6).

3. Soupape de sécurité selon la revendication 2, caractérisée par le fait que les corps de pression prévus entre les groupes de frottement individuels sont agencés en tant que bagues de pression (37) pourvues de surfaces latérales biconiques (38) qui viennent s'appliquer en tant que contre-surfaces en forme de coin contre la surface latérale extérieure (28) de forme sphérique ou consistant en surfaces sphériques (39, 40), des segments annulaires (24).

4. Soupape de sécurité selon une ou plusieurs des revendications 1 à 3, caractérisée par le fait que les segments annulaires (24) comportant une surface latérale extérieure (28) de forme sphérique ou consistant en surfaces sphériques (39, 40) sont maintenus ensemble pour former un groupe de frottement entourant la tige (8) de soupape, par un anneau-ressort (27) introduit dans des gorges périphériques (26),

5. Soupape de sécurité selon une ou plusieurs des revendications 1 à 4, caractérisée par le fait que les surfaces latérales coniques (23, 31, 38) servant de contre-surfaces en coin de l'anneau de pression formant contre-butée d'arrêt (22) et/ou de l'autre ou des autres bagues de pression (32, 37) s'appliquent contre la surface latérale de forme sphérique (28) du côté des segments annulaires (24) tournés vers le corps obturateur (6) suivant un angle au sommet (B) par rapport à la direction de déplacement de la tige (8) de soupape, plus petit que l'angle (Q) correspondant présenté du côté éloigné du corps obturateur.

6. Soupape de sécurité selon une ou plusieurs des revendications 1 à 5, caractérisée par le fait que la prétension du ressort auxiliaire (33) est réglable.

7. Soupape de sécurité selon une ou plusieurs des revendications 1 à 6, caractérisée par le fait que le groupe ou les groupes de frottement (25, 36) sont montés dans une cuvette rapportée (I7) conjointement avec la contre-butée d'arrêt (22), le ou les corps de pression (32, 37) et le ressort auxiliaire (33), ladite cuvette etant encastrée par son bord (20) entre le ressort (9) de soupape et l'assiette supérieure (I3) du ressort de soupape et faisant librement saillie, par son fond (2I) portant la contre-butée d'arrêt (22), dans l'espace intérieur cylindrique (18) du ressort (9) de soupape.

8. Soupape de sécurité selon une ou plusieurs des revendications 1 à 7, caractérisée par le fait que les joues de frottement (24) et/ou les pièces (8) de soupape mobiles venant s'appliquer contre lesdites joues, sont constituées en un matériau à bonnes propriétés de frottement, dans lequel se présente une différence aussi faible que possible en particulier entre le coefficient de frottement au repos et le coefficient de frottement en déplacement.

9. Soupape de sécurité selon une ou plusieurs des revendications 1 à 8, caractérisée par le fait que les joues de frottement (24) et/ou les pièces (8) de soupape mobiles venant s'appliquer contre lesdites joues sont constituées en un matériau de base bon conducteur thermique, sur lequel est appliquée dans la région des surfaces de frottement (34, 35), une couche de recouvrement en un matériau à bonnes propriétés de frottement.

Fig.1

Fig. 2.

Fig. 3

Fig. 4

Fig. 5